# EUROPÄISCHE PATENTSCHRIFT

(11) **EP 1 537 393 B1**
(45) Veröffentlichungstag und Bekanntmachung des Hinweises auf die Patenterteilung: **21.07.2010**
(21) Anmeldenummer: 03727118.6
(22) Anmeldetag: 13.06.2003
(51) Int. Cl.: G01L 5/06, B60P 7/08

(54) **VORRICHTUNG ZUR ANZEIGE EINER ZUGSPANNUNG**
DEVICE FOR SHOWING TENSILE STRESS
DISPOSITIF D'INDICATION DE FORCES DE TRACTION

(30) Priorität: 10.09.2002 CH 153602
(43) Veröffentlichungstag der Anmeldung: 08.06.2005
(73) Patentinhaber: Spanset Inter AG, CH-8618 Oetwil am See (CH)
(72) Erfinder: MAMIE, André, CH-8810 Horgen (CH)
(74) Vertreter: Troesch Scheidegger Werner AG
(86) Internationale Anmeldenummer: PCT/CH2003/000385
(87) Internationale Veröffentlichungsnummer: WO 2004/025235

(56) Entgegenhaltungen:
- WO-A-98/55341
- GB-A- 2 255 109

## Beschreibung

Die Erfindung betrifft eine Vorrichtung zur Anzeige einer Zugspannung nach dem Oberbegriff des Patentanspruches 1.

Bekannt und beschrieben sind Belastungsanzeiger in GB 2 255 109 A mit einer geschlossenen Seilkausche sowie in der GB 2 223 102 A mit einer Art Dehnungsmessstreifen.

Bekannt ist weiterhin durch die EP 0984 873 B1 ein einteiliger Belastungsanzeiger bei dem die Zugkräfte über den veränderlichen Abstand der Schenkelenden einer Feder, welche die Form einer offenen Seilkausche hat, ermittelbar sind. Hierbei umschliesst die Feder den Zugbolzen, der innerhalb der Schlaufe des Zurrbandes angeordnet ist und beschreibt auch bei geringen Kräften einen Weg, der mit dem Auge gut erkennbar ist.

Nachteilig bei dieser Lösung ist, dass bei hohen Zugkräften die Federform sich geometrisch verändert, diese erhöhte Kraft dann nicht mehr mit dem Auge wahrnehmbar ist, sondern nur durch eine zusätzliche Anzeigeverstärkung gemessen werden kann.

Alle bekannten Messeinrichtungen und Belastungsanzeiger dieser Art befinden sich innerhalb der Schlaufe des Zurrgurtes bzw. Hebebandes. Belastungsanzeiger der gleichen Art und für die gleichen technischen Mittel lassen sich auch von aussen anbringen und drücken damit auf die Aussenseiten der Schlaufe. Hierbei liegen dann bei Nullspannung die Innenflanken der Schlaufe aufeinander und werden mit steigender Zugspannung weiter auseinandergedrückt, also eine umgekehrte Funktionsweise.

Die bekannten Belastungsanzeiger haben zum Ziel, den gesamten Bereich einer Belastung zu messen und müssten dadurch die Fähigkeit übernehmen, die geringen Kräfte sowie die hohen Kräfte über die Federkraft aufzunehmen. Bei den bestehenden Geräten werden die hohen Kräfte durch den Einsatz von schwerem Material oder durch eine geringe Bewegung der Federelemente abgedeckt. Um nun die geringen Kräfte, wie sie bei einer Vorspannung auftreten, messen zu können, braucht es dementsprechend eine schwache Feder, die aber auch der hohen Zugkraft standhält. Aus der Praxis zeigt sich, dass die schwachen Federn beim Überspannen eine Formveränderung erhalten und so die Werte von da an falsch anzeigen. Bei der Lösung der Aufgabe beschränkt man sich deshalb auf die Zugspannung und ignoriert die darüberliegenden Kräfte.

Der Erfindung liegt die Aufgabe zugrunde, eine Vorspannanzeige der im Oberbegriff des Anspruches 1 genannten Art so auszubilden, dass es sowohl bei geringen Kräften zu einer Anzeige kommt, bei Erreichen von hohen Kräften die Geometrie der Feder und damit die Federkonstante erhalten bleibt, sowie die Bewegung der Feder gezielt auf den Bereich der vorgegebenen Kraft zu begrenzen. Mit Federkonstante oder Federrate bezieht man sich auf die Eigenschaften, nämlich Federstärke und Federgeometrie des Elementes.

Der hauptsächliche Einsatz dieses Gerätes liegt beim Sichern einer Ladung, es ermöglicht dem Benutzer die erzeugte Spannkraft abzulesen, um so ein korrektes Zurren durchzuführen. Durch das Setzen der Ladung kann es zu einem Verlust der Vorspannung kommen, die ebenfalls über diese Anzeige abgelesen werden kann.

Erfindungsgemäss wird diese Aufgabe durch die Merkmale des Anspruchs 1 gelöst. Diese Lösung basiert auf einer Kombination von zwei in Wirkverbindung stehenden Elementen, bei der einerseits bereits geringe Kräfte in einem gespannten System angezeigt werden und andererseits die zulässige Vorspannung durch eine formschlüssige Endlage angezeigt wird. Die Federkonstante der Feder ist so bemessen, dass die zu erkennende Kraft direkt ablesbar ist. Damit es beim Überschreiten dieser Kraft zu keiner Formveränderung der Feder kommt, wird der Federweg durch ein Formteil begrenzt. Der Formschluss von elastischer Feder mit dem elastischen Formteil ist in der Lage, ein Vielfaches der angezeigten Kraft aufzunehmen. Die Kombination von zwei oder mehreren Teilen gewährleistet durch die Ausnutzung der unterschiedlichen Eigenschaften dieser Teile einerseits eine vereinfachte Herstellung und andererseits kann die Toleranz der Herstellverfahren durch das Einbeziehen der vorgefertigten Teile in der Produktion reduziert werden. Die Aufgabe jedes einzelnen Teiles beschränkt sich somit auf das Wesentliche und stellt dadurch ein optimales Erreichen seiner Funktion sicher. Durch das Anbringen von zusätzlichen Funktionen wird das einzelne Teil nicht belastet, sondern kann von dem Material, das diese Funktion problemlos übernehmen kann, sicher ausgeführt werden.

Die Erfindung wird anhand von Ausführungsbeispielen näher erläutert. Es zeigen:
- Fig. 1: Funktionsprinzip der Vorspannanzeige mit einem druckabhängigen formveränderlichen Formteil
- Fig. 2: Funktionsprinzip der Vorspannanzeige mit einem formstabilen Formteil
- Fig. 3: Variante einer zusätzlichen Feder, die die Massanzeige an die Schenkel der Feder drückt und unter Spannung die Anzeige nach hinten verschiebt
- Fig. 4: Variante eines elastischen Formteils, das die Massanzeige umlenkt
- Fig. 5: Variante einer losen Kombination, die eine Anzeige zur Seite ermöglicht
- Fig. 6: Formschlussteil als Spritzgussvariante mit zusätzlicher Zentrierung

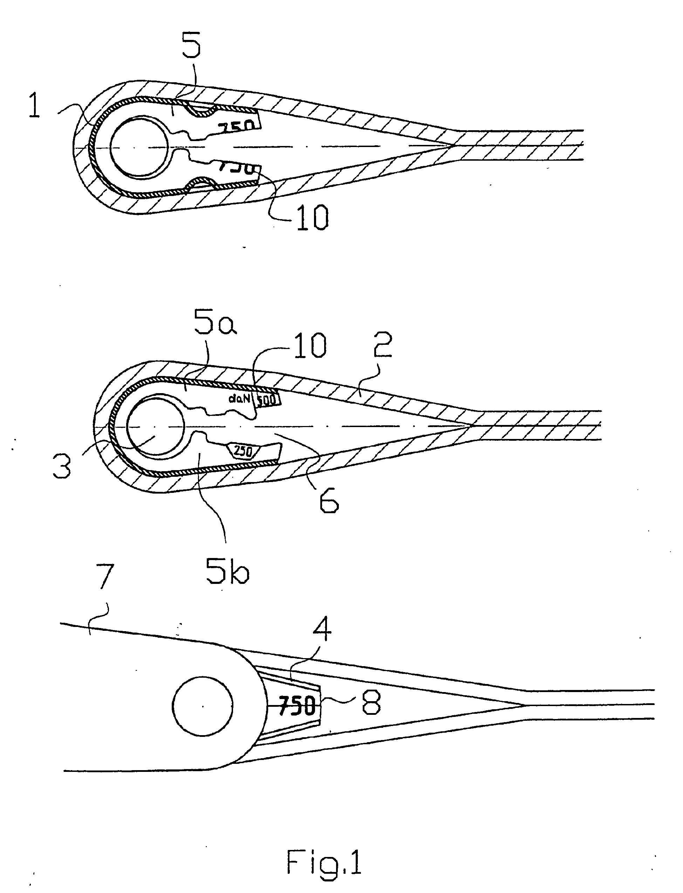

Fig. 1 zeigt eine Feder (1) welche ein formveränderliches Formteil (5) umschliesst und bei Nullspannung die Innenflanken der Schlaufe (2) auseinander spreizt. Feder (1) und Formteil (5) bilden eine Einheit sodass beide Elemente die gleichen Bewegungen ausführen. Bei Zugbelastung durch das Spannelement (7) über den Bolzen (3) drücken die Innenflanken der Schlaufe (2) auf die Kombination Feder (1) und Formteil (5) und bewegen die Schenkel (5a) und (5b) des Formteils (5) aufeinander zu. Bei Erreichen der zulässigen Vorspannung, der Endlage (8), liegen die Schenkel (5a) und (5b) des Formteils (5) formschlüssig aneinander, sodass es zu keiner weiteren Bewegung von Feder (1) und Formteil (5) kommen kann. Die erreichte Vorspannung ist nun über die Massangabe (10) gut ablesbar.

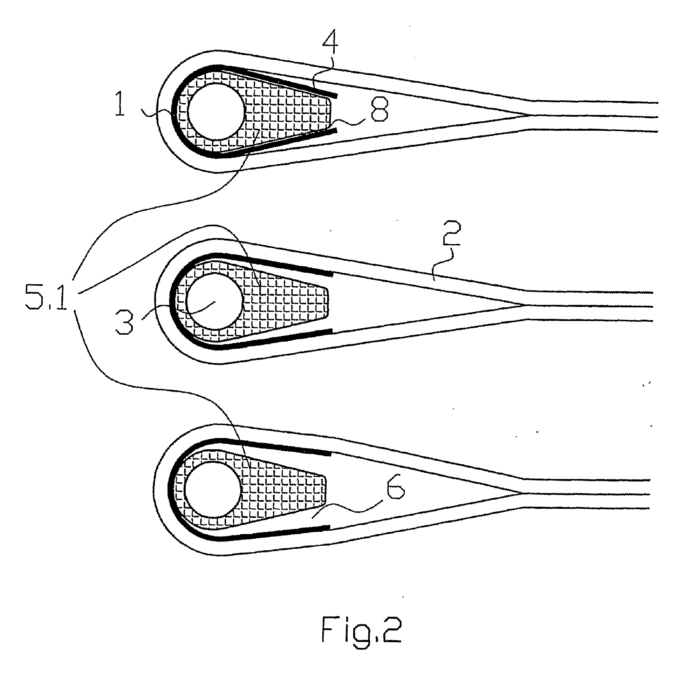

Fig. 2 zeigt eine Feder (1) mit einem formstabilen Formteil (5.1). Bei dieser Ausführung wird die Zugbelastung allein durch die Federkraft der Feder (1) über deren Schenkel (4) mit Massangabe (6) angezeigt. Auch hier verhindert das Formteil (5.1) das Überspannen der Federkraft der Feder (1) durch einen Formschluss von Feder (1) und Formteil (5.1) bei Erreichen der Endlage (8)

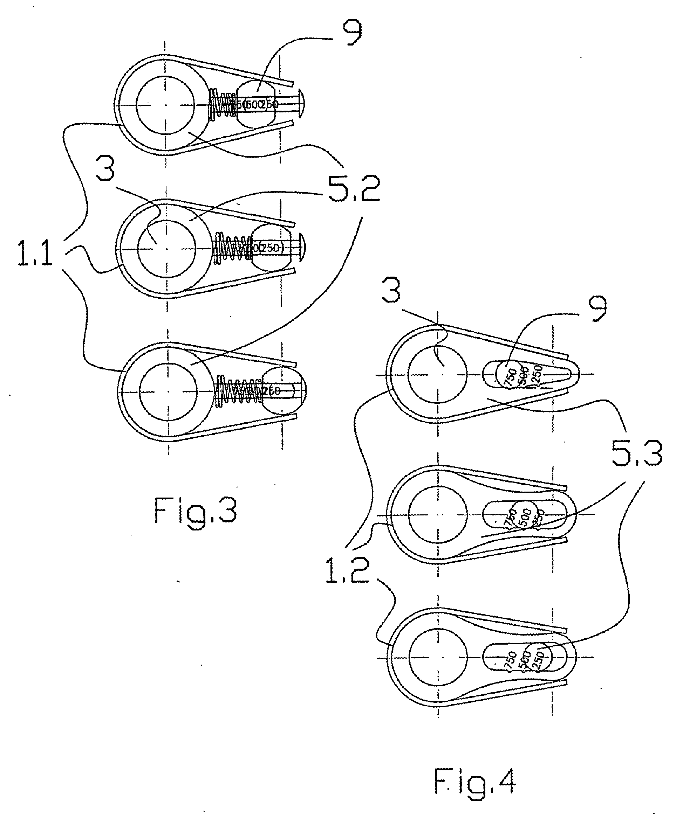

In Fig. 3 ist eine Belastungsanzeige dargestellt, bei der die Schenkelenden der Feder (1.1) den Zeiger (9) bei Zugbelastung horizontal gegen eine Feder an das Formteil (5.2) in Richtung des Bolzens (3) bewegen. Die Federkraft ist hier auf die jeweilige maximale Vorspannung einstellbar.

Fig. 4 zeigt eine Belastungsanzeige, bei der die Schenkelenden der Feder (1.2) auf ein elastisches Formstück (5.3) drücken und Zeiger (9) durch einen verjüngenden Spalt in Richtung des Bolzen (3) bewegen.

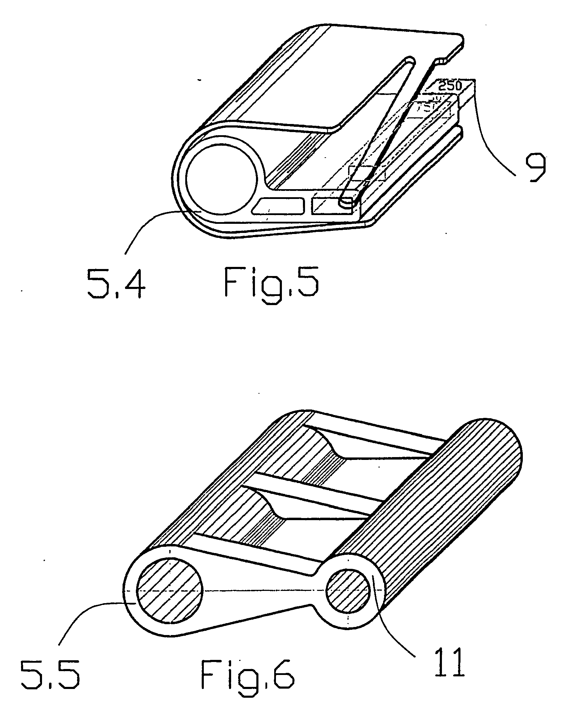

Fig. 5 zeigt das gleiche Funktionsprinzip nur mit einer seitlichen Anzeige, die den Zeiger (9) quer aus dem Formteil (5.4) schiebt.

In Fig. 6 ist ein Formteil (5.5) als Spritzgussteil mit einer zusätzlichen Zentrierung (11) dargestellt, das gemäss Fig. 2 eingesetzt werden kann.

## Patentansprüche

1. Vorrichtung zum Anzeigen einer Zugspannung an einer Verbindung von einem Gurtband und Zugmitteln aufweisend
- einen starren Steg (3) der die Verbindung von Gurtband (2) und Zugmittel (7) darstellt,
- eine Feder (1) mit einem Formteil (5) welche um den starren Steg (3) gelegt sind und welche von einer gebildeten Schlaufe des Gurtbandes (2) formschön umgebbar sind, wobei die Feder dafür geeignet ist,
dass bei Null-Spannung die Federenden die Innenflanken der Schlaufe auseinanderspreitzen und bei Zugspannung eine rückstellbare Formveränderung der Feder (1) zulässig ist, **dadurch gekennzeichnet dass** die Feder (1) mit dem Formteil (5) formschlüssig so kombiniert ist, dass durch die Zugspannung des Zugmittels in einem unteren Bereich die Feder (1) bis zu deren durch das Formteil (5) bestimmten Endlage (8) verformbar ist, dass eine Skala (10) vorgesehen ist für das Ablesen der Zugspannung und dass in einem zweiten oberen
Zugspannungsbereich durch die Zugspannung die Feder nicht zusätzlich verformbar ist, da die Feder auf das sich in seiner geschlossenen Position befindenden Formteil (5) aufliegt,
sodass es zu keiner Überspannung und damit Veränderung der Federkonstante der Feder (1) und eines bestimmten Anzeigenbereiches (6) kommt.

2. Vorrichtung nach Anspruch 1, **dadurch gekennzeichnet, dass** eine Kombination von der Feder (1) und dem Formteil (5) eine Vorrichtung darstellt, bei welcher die Einzelteile sowohl lose als auch vorzugsweise fest verankert sein können.

3. Vorrichtung nach Anspruch 1 und 2, **dadurch gekennzeichnet, dass** das Formteil (5) zwei Schenkel (5a,5b) aufweist und bis zum Erreichen der formschliessenden Endlage (8) druckabhängig formveränderlich ist, die Bewegung der Feder (1) mitmacht und durch die veränderliche Lage der beiden Schenkel (5a,5b) die jeweilige Vorspannkraft, mittels einer Massangabe (10), ablesbar ist.

4. Vorrichtung nach Anspruch 1 und 2, **dadurch gekennzeichnet, dass** das Formteil (5.1) druckunabhängig formstabil ausgebildet ist.

5. Vorrichtung nach einem der Ansprüche 1 bis 4, **dadurch gekennzeichnet, dass** die Feder (1) und das Formteil (5) aus unterschiedlichem Material, vorzugsweise Federstahl und Kunststoff, hergestellt ist.

6. Vorrichtung nach einem der Ansprüche 1 bis 5, **dadurch gekennzeichnet, dass** die Feder (1) eine Hülle um das Formteil (5) bildet oder das Formteil (5) die Feder (1) einschliesst, um auf diese Art eine feste Verankerung zwischen den beiden Teilen zu bewirken.

7. Vorrichtung nach einem der Ansprüche 1 bis 6,
**dadurch gekennzeichnet, dass** das Formteil (5) Massangaben (10) beinhaltet, die direkt eingraviert sind oder als separate Teile auf das Formteil (5) aufgesetzt werden können.

8. Vorrichtung nach einem der Ansprüche 1 bis 7,
**dadurch gekennzeichnet, dass** das Formteil (5.2,5.3,5.4) mit einem beweglichen Teil (9) bestückt ist, welches sich durch die Bewegung der Feder (1) so auf einer Bahn verschiebt, dass es zu einem vergrösserten Anzeigebereich (6) kommt.

9. Verwendung der Vorrichtung nach einem der Ansprüche 1 bis 8 für die Verbindung eines Gurtbandes mit Zugmitteln, wobei als Zugmittel Rätschen oder als deren Adaptionsmittel Schäkel vorgesehen sind.

## Claims

1. Device for showing tensile stress in a connection of a strap and tension means, comprising
- a rigid web (3) which constitutes the connection of the strap (2) and tension means (1),
- a spring (1) with a moulding (5) which is laid about the rigid web (3) and which can be surrounded closely by a formed loop of the strap (2), wherein the spring is able on zero tension to cause the spring ends to spread the inner flanks of the loop apart, and on tensile stress a reversible form change of the spring (1) is permitted, **characterised in that** the spring (1) is combined with the moulding (5) by form-fit so that due to the tensile stress of the tension means in a lower range, the spring (1) can be deformed up to its end position (8) determined by the moulding (5), that a scale (10) is provided for reading the tensile stress and that in a second upper tensile stress range the spring is not additionally deformable due to the tensile stress as the spring lies on the moulding (5) which is in its closed position, so that no over-strain and hence change of spring constant of the spring (1) or change of a particular display range (6) occurs.

2. Device according to claim 1, **characterised in that** a combination of the spring (1) and the moulding (5) constitutes a device in which the individual parts can be both loose and preferably firmly anchored.

3. Device according to claim 1 and 2, **characterised in that** the moulding (5) has two legs (5a, 5b) and until reaching the form-fit end position (8) can change form pressure-dependent and follows the movement of the spring (1), and due to the changing position of the two legs (5a, 5b) the respective pretension force can be read by means of a dimension indicator (10).

4. Device according to claim 1 and 2, **characterised in that** the moulding (5.1) is designed to be stable in form independently of pressure.

5. Device according to any of claims 1 to 5, **characterised in that** the spring (1) and the moulding (5) are made of different materials, preferably spring steel and plastic.

6. Device according to any of claims 1 to 5, **characterised in that** the spring (1) forms a sleeve about the moulding (5) or the moulding (5) encloses the spring (1), in order thus to achieve a firm anchorage between the two parts.

7. Device according to any of claims 1 to 6, **characterised in that** the moulding (5) contains dimension data (10) which are directly engraved or can be applied to the moulding (5) as separate parts.

8. Device according to any of claims 1 to 7, **characterised in that** the moulding (5.2, 5.3, 5.4) is fitted with a moving part (9) which moves on a path due to the movement of the spring (1) such that an enlarged display range (6) occurs.

9. Use of the device according to any of claims 1 to 8 for connection of a strap with tension means, wherein ratchets are provided as tension means or shackles as their adaptation means.

## Revendications

1. Dispositif pour indiquer une contrainte de traction sur une liaison entre une courroie et des moyens de traction, comportant
- une tige rigide (3) qui représente la liaison entre la courroie (2) et le moyen de traction (7),
- un ressort (1) avec une pièce profilée (5), qui sont placés autour de la tige rigide (3) et qui sont aptes à être entourés de manière esthétique par une boucle formée par la courroie (2), le ressort étant apte à écarter avec ses extrémités les flancs intérieurs de la boucle, lors d'une contrainte nulle, tandis que lors d'une contrainte de traction le ressort (1) peut changer de forme tout en pouvant reprendre sa forme initiale,
**caractérisé en ce que** le ressort (1) est combiné par complémentarité de forme avec la pièce profilée (5) de telle sorte que sous l'action de la contrainte de traction du moyen de traction dans une zone inférieure, le ressort (1) soit apte à se déformer jusqu'à sa position terminale (8) définie par la pièce profilée (5), **en ce qu'**il est prévu une graduation (10) pour lire la contrainte de traction, et **en ce que** dans une seconde zone supérieure de contrainte de traction, le ressort n'est pas apte à se déformer davantage sous l'action de la contrainte de traction, étant donné qu'il est posé sur la pièce profilée (5) qui se trouve en position fermée, de sorte qu'il ne se produit pas de surtension, et donc pas de modification de la constante du ressort (1) ni d'une zone d'indication (6) définie.

2. Dispositif selon la revendication 1, **caractérisé en ce qu'**une combinaison du ressort (1) et de la pièce profilée (5) représente un dispositif dans lequel les pièces détachées peuvent être ancrées aussi bien de manière lâche que, de préférence, de manière fixe.

3. Dispositif selon les revendications 1 et 2, **caractérisé en ce que** la pièce profilée (5) présente deux branches (5a, 5b) et a une forme variable, jusqu'à atteindre la position finale par complémentarité de forme (8), en fonction de la pression, et suit le mouvement du ressort (1), et grâce à la position variable des deux branches (5a, 5b) la force de contrainte correspondante est apte à être lue à l'aide d'une indication de cote (10).

4. Dispositif selon les revendications 1 et 2, **caractérisé en ce que** la pièce profilée (5.1) a une forme stable quelle que soit la pression.

5. Dispositif selon l'une des revendications 1 à 4, **caractérisé en ce que** le ressort (1) et la pièce profilée (5) sont fabriqués à partir de matériaux différents, de préférence à partir d'acier à ressort et de matière plastique.

6. Dispositif selon l'une des revendications 1 à 5, **caractérisé en ce que** le ressort (1) forme une gaine autour de la pièce profilée (5), ou la pièce profilée (5) entoure le ressort (1) pour provoquer de cette manière un ancrage solide entre les deux éléments.

7. Dispositif selon l'une des revendications 1 à 6, **caractérisé en ce que** la pièce profilée (5) contient des indications de cote (10) qui sont gravées directement ou qui peuvent être appliquées sur la pièce profilée (5) sous la forme d'éléments séparés.

8. Dispositif selon l'une des revendications 1 à 7, **caractérisé en ce que** la pièce profilée (5.2, 5.3, 5.4) est garnie d'un élément mobile (9) qui se déplace sur une glissière, du fait du mouvement du ressort (1), de telle sorte qu'il se forme une zone d'indication (6) agrandie.

9. Utilisation du dispositif selon l'une des revendications 1 à 8 pour relier une courroie à des moyens de traction, étant précisé qu'il est prévu comme moyen de traction des mécanismes à rochet, ou comme moyens d'adaptation de ceux-ci des anneaux d'accouplement.
